# EUROPEAN PATENT SPECIFICATION

(11) **EP 2 771 560 B1**
(45) Date of publication and mention of the grant of the patent: **02.12.2020**
(21) Application number: 12787988.0
(22) Date of filing: 26.10.2012
(51) Int. Cl.: F02K 1/15, F16L 27/12, F15B 15/14

(54) **TELESCOPING FLUID PORTING TUBE**
TELESKOPIERBARES DRUCKMITTELROHR
TUBE TÉLÉSCOPIQUE POUR LE TRANSPORT DE FLUIDE

(30) Priority: 27.10.2011 US 201161552179 P; 04.11.2011 US 201161555517 P
(43) Date of publication of application: 03.09.2014
(73) Proprietor: Parker-Hannifin Corporation, Cleveland, Ohio 44124-4141 (US)
(72) Inventor: VANDERVEEN, John Scott, Galesburg, Michigan 49053 (US); VOSS, Julian Douglas, Kalamazoo, Michigan 49004 (US)
(74) Representative: Davies, Gregory Mark
(86) International application number: PCT/US2012/062066
(87) International publication number: WO 2013/063362

(56) References cited:
- EP-A1- 0 924 158
- US-A- 3 318 199
- US-A- 3 814 324
- US-A- 5 011 195
- US-A- 5 638 616
- US-A1- 2011 256 000

## Description

### Field of Invention

The present invention relates generally to electro-hydraulic control systems, and more particularly to an electro-hydraulic control system of an engine having a telescoping fluid porting tube for porting fluid for controlling the movement of an engine structure.

### Background

An aircraft turbine engine includes an engine structure and at least one secondary structure, such as a variable area fan nozzle (VAFN) structure moveable relative to the engine structure. The VAFN structure develops a portion of the thrust provided by the engine by controlling a portion of the airflow through fan portions of the engine. The VAFN structure may be movable to different positions for aircraft take-off, landing, cruise, etc. Hydraulic control systems and electronic control systems may be used for controlling movement of the secondary structure relative to the engine structure.

A connector for conveying hydraulic pressure from a relatively fixed source to a relatively moveable hydraulically actuable arrangement is described in US5011195.

An example of a known propulsion nozzle is described in combination with a gas turbine engine in US3814324.

### Summary of Invention

The present invention provides an electro-hydraulic control system for controlling the movement of a third structure of an engine using a power actuator mountable to the third structure, a telescoping fluid porting tube for porting a fluid to the power actuator and a control valve for controlling the flow of movement to effect the movement of the third structure. In this way, the third structure, such as a nozzle slat of an engine, may be moved via a compact and lightweight electro-hydraulic system.

In the claimed invention, an aircraft engine is provided as defined in claim 1. The engine is provided including a mechanical assembly including a first structure (an engine base structure), a second structure, and a third structure, and an electro-hydraulic control system including a power actuator mounted between the second structure and the third structure, the power actuator for moving the third structure, a telescoping fluid porting tube mounted between the first structure and the second structure for porting a fluid to the power actuator, and a control valve for controlling flow of the fluid through the telescoping fluid porting tube to the power actuator for effecting movement of the third structure.

The telescoping fluid porting tube includes an outer tubular body having a closed end (mounting end) mounted to the first structure, i.e. the engine base structure, an open end (or rod end), and a tubular wall defining a chamber, a piston axially disposed in and axially translatable within the chamber, and a telescopically movable piston rod having a first end connected to the piston and a second end mounted to the second structure, the piston rod extending at least partially through the open end of the outer tubular body and being radially inwardly spaced from the tubular wall, wherein the piston rod includes a fluid passageway extending along a length thereof in fluidic communication with the chamber for transferring fluid along a length of the piston rod.

The outer tubular body of the telescoping fluid porting tube includes a port fluidically coupled to the control valve for receiving fluid therefrom.

The port may extend through the tubular wall.

The port may be adjacent to the open end of the outer tubular body.

The telescoping fluid porting tube may further include the piston sealed to an inner portion of the tubular wall to prevent fluidic communication between the closed end and the fluid passageway when the piston is axially translated.

The piston rod may include at least one opening at the first end extending through a wall of the piston rod for fluidically coupling the chamber to the fluid passageway.

The telescoping fluid porting tube may be mounted to the first structure via a gimballing mount.

The electro-hydraulic control system may also include first and second telescoping fluid porting tubes mounted between the first structure and the second structure.

The electro-hydraulic control system may also include a pair of telescoping fluid porting tubes, wherein a first telescoping fluid porting tube has a first fluid path extending between the control valve and the power actuator for porting fluid for effecting movement of the third structure away from the first structure, and wherein a second telescoping fluid porting tube has a second fluid path extending between the control valve and the power actuator for porting fluid for effecting movement of the third structure towards the first structure.

The first and second telescoping fluid porting tubes may be parallel to one another.

The electro-hydraulic control system may further include a pair of power actuators for effecting movement of the third structure relative to at least one of the first structure or the second structure.

The control valve may include at least one of an electro-hydraulic servo-valve and/or a bypass valve.

The electro-hydraulic control system may also include a control system for regulating a fluid pressure at the power actuator, the control system communicatively connected to both the control valve and to a feedback apparatus mountable to the third structure or locatable to contact the third structure.

The feedback apparatus may include a linear variable differential transformer.

The foregoing and other features of the invention are hereinafter described in greater detail with reference to the accompanying drawings.

### Brief Description of the Drawings

Fig. 1 is a schematic view of an engine having an exemplary electro-hydraulic control system according to the invention.
Fig. 2 is a schematic view of the exemplary electro-hydraulic control system according to the invention.
Fig. 3 is a perspective view of the exemplary electro-hydraulic control system of Figs. 1 and 2.
Fig. 4 is a perspective view of a power actuator of the electro-hydraulic control system.
Fig. 5 is a cross-sectional view of the power actuator of Fig. 4.
Fig. 6 is a cross-sectional view of an end of the power actuator of Fig. 4
Fig. 7 is perspective view of exemplary telescoping fluid porting tubes of the electro-hydraulic system.
Fig. 8 is a cross-sectional view of one of the telescoping fluid porting tubes of Fig. 7.
Fig. 9 is a schematic view of the engine having the exemplary electro-hydraulic control system and a thrust reverser actuation system.
Fig. 10 is a perspective view of an exemplary control valve of Fig. 9.
Fig. 11 is a perspective view of an exemplary controller of Fig. 9.
Fig. 12 is a perspective view of an exemplary linear variable differential transducer of Fig. 9.

### Detailed Description

The principles of the present invention have particular application to electro-hydraulic systems on aircrafts and thus will be described below chiefly in this context. It will of course be appreciated, and also understood, that the principles of the invention may be useful in other applications including, in particular, other vehicles having electro-hydraulic systems, such as construction equipment and tanks.

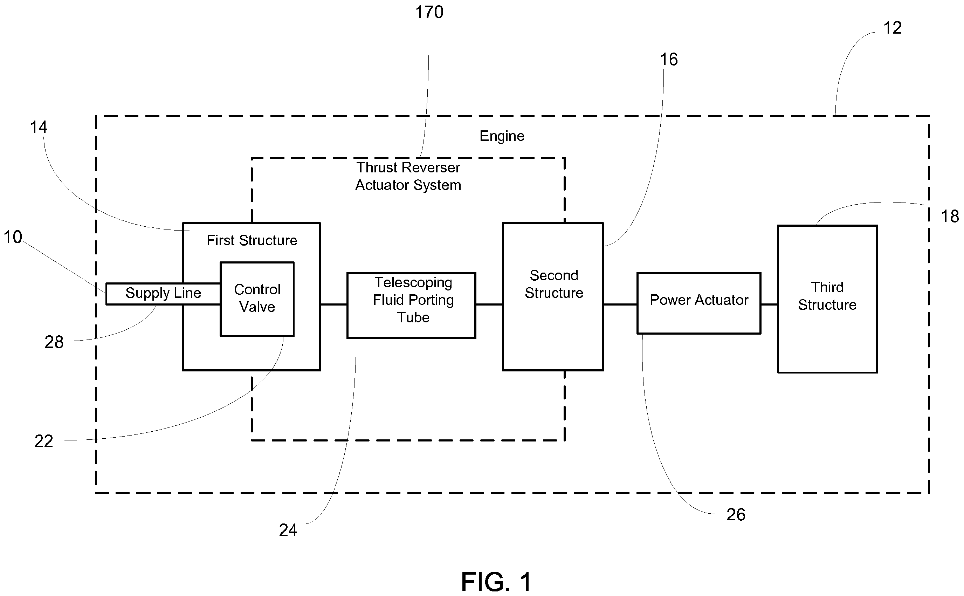

Referring now in detail to the drawings and initially to Fig. 1, an electro-hydraulic control system 10 is provided in an engine 12, which may be any suitable engine, such as a turbine engine. The engine 12 includes an engine base structure 14 as first structure, a second structure, such as a translating cowling (herein "transcowl") 16, and a third structure, such as a variable area fan nozzle structure (herein "VAFN structure") 18. The VAFN structure 18 may be any suitable structure for controlling a portion of the thrust of air flow provided by the engine 12, such as a slat, a partial cowling, etc.

The electro-hydraulic system includes a telescoping fluid porting tube 24 mounted between the engine base structure 14 and the transcowl 16, a power actuator, such as a VAFN actuator 26 mounted between the transcowl 16 and the VAFN structure 18, a control valve 22 for controlling flow of fluid through the telescoping fluid porting tube 24 to the VAFN actuator 26, and supply lines 28. The telescoping fluid porting tube 24 and the VAFN actuator 26 may be mounted to the engine base structure 14, transcowl 16 and VAFN structure 18 in any suitable manner.

The control valve 22 is mounted to the engine base structure 14. The supply line 28 is provided to deliver a fluid, such as a hydraulic fluid, to the electro-hydraulic control system 10, and more particularly to the control valve 22. The control valve 22 may controllably direct flow of the fluid through the telescoping fluid porting tube 24 to the VAFN actuator 26 for effecting movement of the VAFN structure 18 relative to at least one of the engine base structure 14 or the transcowl 16. The VAFN structure 18 may be moved via a compact and lightweight electro-hydraulic system. It will be appreciated that such an electro-hydraulic system may avoid the use of an electro-mechanical system.

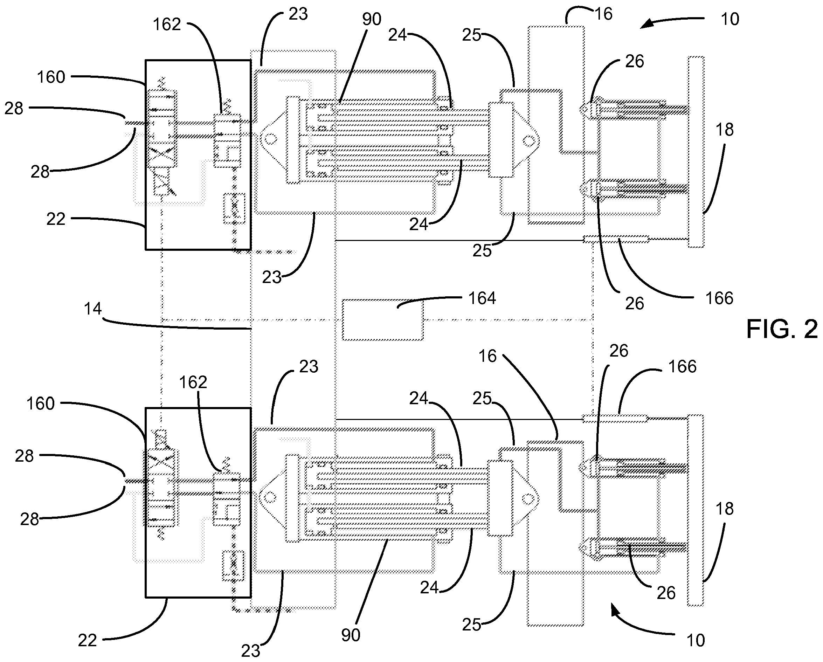

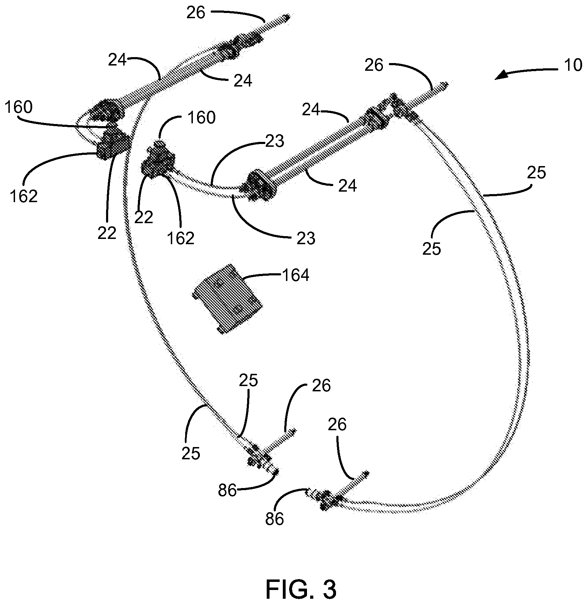

Turning now to Figs. 2 and 3, two electro-hydraulic control systems 10 are illustrated, one control system serving as a left electro-hydraulic control system and one control system serving as a right electro-hydraulic control system. The left and right electro-hydraulic control systems are substantially the same, and thus only one control system will be described below in detail.

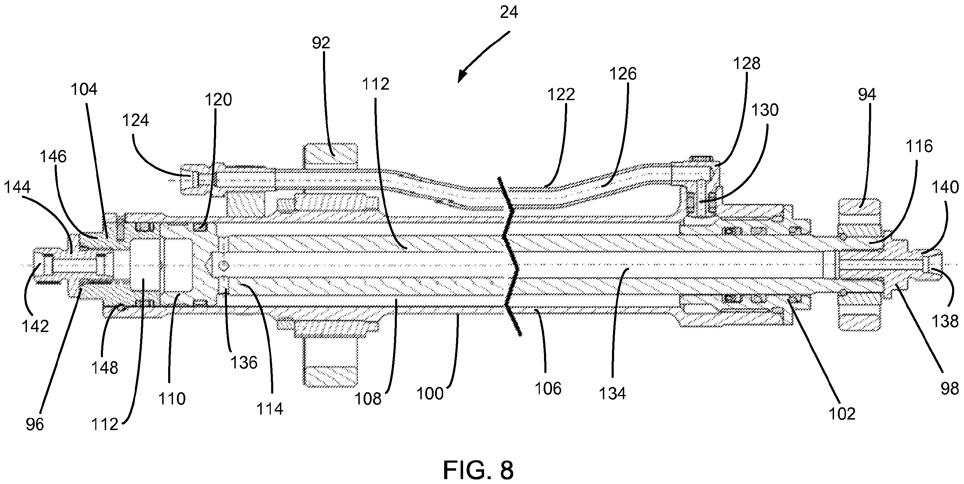

Each electro-hydraulic control system 10 includes a pair of telescoping fluid porting tubes 24, a pair of VAFN actuators 26 mounted to any of the engine base structure 14, transcowl 16, and/or VAFN structure 18, in any suitable manner. It will be appreciated, however, that any suitable number of telescoping fluid porting tubes 24 and VAFN actuators 26 may be provided. Each of the telescoping fluid porting tubes 24 is fluidically coupled to the control valve 22 in any suitable manner, such as by a suitable tube 23, which delivers a suitable fluid to a port 124 (Fig. 8) of the fluid porting tube 24. Similarly, each of the telescoping fluid porting tubes 24 is fluidically coupled to a respective one of the VAFN actuators in any suitable manner, such as by a suitable tube 25.

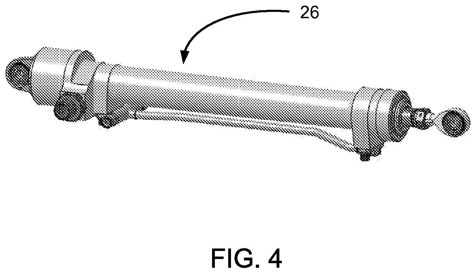

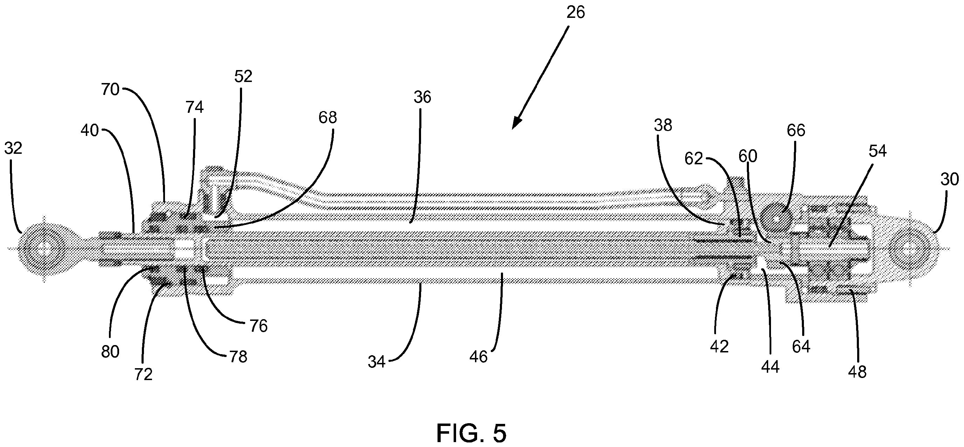

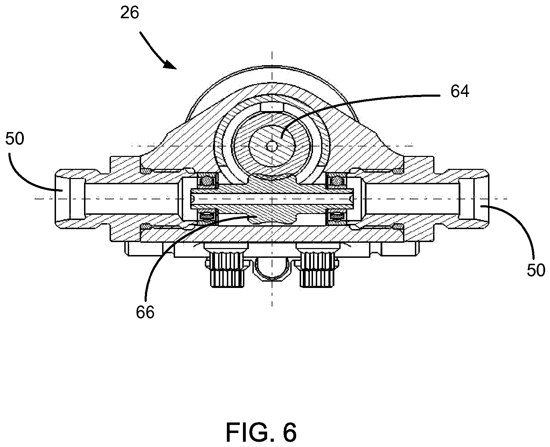

Turning now to Figs. 4-6, the VAFN actuator 26 includes a head end 30 for mounting to the transcowl 16 and a rod end 32 for mounting to the VAFN structure 18. Alternatively, it will be appreciated that the head end 30 may be mountable to the VAFN structure 18 and the rod end 32 may be mountable to the transcowl 16. The VAFN actuator 26 also includes an outer body 34 defining a piston chamber 36 for receiving a piston 38 and a piston rod 40 of the VAFN actuator. The piston 38 seals to an inner wall of the outer body 34 using a suitable seal such as o-ring 42, to separate the piston chamber 36 into an extend chamber 44 and a retract chamber 46, and the head end 30 is retained in the outer body 34 by a suitable retainer, such as a threaded retainer 48. The extend chamber 44 receives fluid through an extend port 50 for effecting extension of the VAFN structure 18, and the retract chamber 46 receives fluid through a retract port 52 for effecting retraction of the VAFN structure 18.

At least one of the pair of VAFN actuators 26 may include a gear system 54 adjacent the head end 30 for mechanically synchronizing the VAFN actuator 26 with the other VAFN actuator 26, thus synchronizing movement of a VAFN structure 18. The gear system 54 includes an acme screw 60, an acme nut 62 surrounding the acme screw 60, a worm gear 64 engaging the acme screw 60 and a worm shaft 66, and a flex cable (not shown) connected to the worm shaft 66 of each of the pair of VAFN actuators 26. At the rod end 32, the VAFN actuator 26 includes an end gland 68 closing an end 70 of the outer body 34 and retained by a retainer ring 72. The end gland 68 is sealed to an inner wall of the outer body 34 by a suitable seal, such as o-ring 74, and the end gland 68 is sealed to an outer wall of the piston rod 40 by suitable seals, such as o-rings 76, 78 and annular scraper 80.

At least one of the VAFN actuators 26 may also include a manual drive unit 86 (Fig. 3) for mechanically coupling to the gear system 54 of the VAFN actuator 26. The manual drive unit 86 may be included in a lower VAFN actuator 26 for ease of access and may enable manual control of at least one VAFN actuators 26, thereby effecting manual movement of the VAFN structure 18. In the case of a malfunctioning VAFN actuator 26 of an aircraft, the VAFN structure 18 may be positioned to an open position required for takeoff and landing of the aircraft.

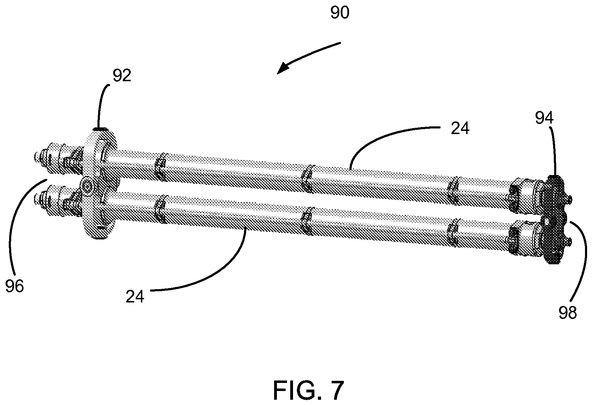

Turning now to Figs. 7 and 8, the telescoping fluid porting tube 24 enables porting of fluid, such as hydraulic fluid, between stationary and moveable structures of the engine 12. Particularly, the transcowl 16 may be moveable relative to the engine base structure 14 between a stowed position and an active position. Thus, during movement of the transcowl 16, telescopic movement of components of the telescoping fluid porting tube 24 may enable porting of fluid between components of the electro-hydraulic control system 10 that are connected to the engine base structure 14, transcowl 16, and VAFN structure 18. Additionally, when the transcowl 16 is in a stowed position, telescoping components of the telescoping fluid porting tube 24 are bottomed internally.

Fig. 7 illustrates a pair of telescoping fluid porting tubes 24, referred to herein as a porting tube assembly 90, configured to be mounted between the engine base structure 14 and the transcowl 16. One of the telescoping fluid porting tubes 24 may be fluidically connected to the VAFN actuator 26, such as to the extend chamber 44 of the VAFN actuator, to provide fluid to the actuator for effecting extension of the VAFN structure18. The other telescoping fluid porting tube 24 may be fluidically connected to the other VAFN actuator 26, such as to the retract chamber 46 of the VAFN actuator 26, to provide fluid to the actuator for effecting retraction of the VAFN structure 18. The telescoping fluid porting tubes of the porting tube assembly 90 may be mounted parallel to one another, which may be effected via gimballing mount 92 on a head end 96 and via gimballing mount 94 on the a rod end 98 of the telescoping fluid porting tube 24, respectively, for mounting the telescoping fluid porting tubes 24 to the engine base structure 14 and the transcowl 16 to accommodate for potential misalignment between the engine base structure 14 and the transcowl 16. For example, axial clearance may be built into the gimballing mounts 92, 94 so that the telescoping fluid porting tube 24 bottoms internally when the transcowl 16 is in a stowed position. Alternatively, it will be appreciated that the head end 96 may be mountable to the transcowl 16 and the rod end 98 may be mountable to the engine base structure 14.

The telescoping fluid porting tubes 24 include an outer tubular body 100 with an open end 102 at the rod end 98 and a closed end 104 at the head end 96. A tubular wall 106 of the outer tubular body 100 defines a chamber 108 opening to the open end 102. A piston 110 is axially disposed in and axially translatable within the chamber 108, and a telescopically moveable piston rod 112 has a first end 114 and a second end 116, where the first end 114 is connected to the piston 110. The second end 116 of the piston rod 112 may be mountable to one of the engine base structure 14 or the transcowl 16. The piston rod 112 extends at least partially through the open end 102 of the outer tubular body 100 and is radially inwardly spaced from the tubular wall 106 thereby defining a fluid flow passage between the tubular wall 106 and an outer wall of the piston rod 112. The piston 110 is sealed to an inner portion of the tubular wall 106 by a suitable seal, such as o-ring 120, to prevent fluidic communication between the closed end 104 and the fluid flow passage between the tubular wall 106 and the outer wall of the piston rod 112 when the piston 110 and piston rod 112 are axially translated or telescoped relative to the outer tubular body 100.

The telescoping fluid porting tube 24 also includes an extension tube 122 having a first end defining an extension port 124 configured to be fluidically coupled to the control valve 22. The extension tube 122 also includes a fluid passageway 126 that runs along a length of the tubular body 100 and a second end 128 that is sealed to an opening 130 in the tubular body 100. The second end 128 may be located proximate the open end 102 of the outer tubular body 100.

Fluid enters the extension tube 122 via the extension port 124, flows through the fluid passageway 126 and out the second end 128 and into the chamber 108. The fluid flows through the chamber 108 to the first end 114 of the piston rod 112 and enters a cavity of the piston rod that defines a fluid passageway 134 via one or more openings 136 in a wall of the piston rod 112. The fluid flows through the fluid passageway 134 along a length of the piston rod 112 to a port 138 in a plug 140 coupled to the second end 116 of the piston rod 112 in any suitable manner. The port 140 is fluidically coupled to the VAFN actuator 26 for delivering fluid from the fluid passageway 134 to the VAFN actuator 26.

The telescoping fluid porting tube 24 may also include a port 142 in a plug 144 coupled an end member 146 in any suitable manner, and the end member 146 may be coupled to the closed end 104 in any suitable manner, such as by a retainer wire 148. The port 142 fluidically couples a fluid line having return pressure of the engine 12 with a portion of the chamber 108 between the closed end 104 and the piston 110, which is sealed off from the rest of the chamber 108 by the o-ring 120. The ports 142 on each of the telescoping fluid porting tubes 24 may be fluidically connected. The system may provide equal pressure on each side of the piston 110, which allows for unrestricted telescoping of the telescoping fluid porting tube 24 and unrestricted motion of the transcowl 16 without adding significant load to the transcowl 16 or the engine base structure 14.

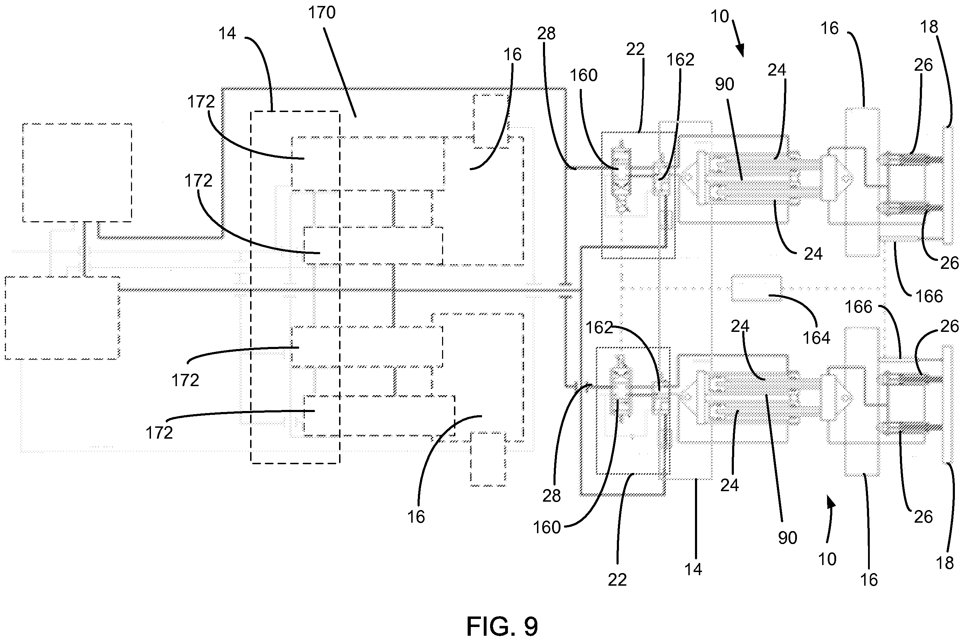

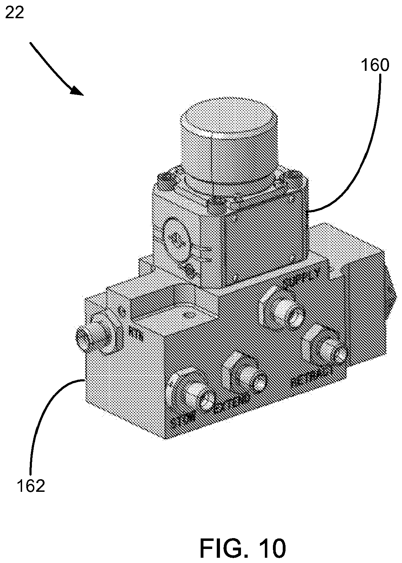

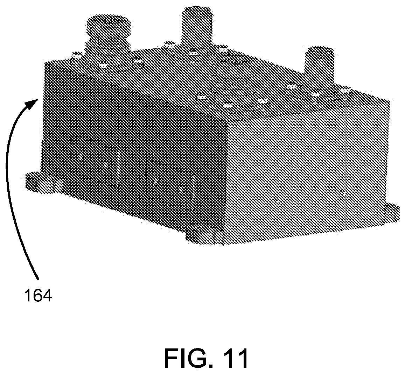

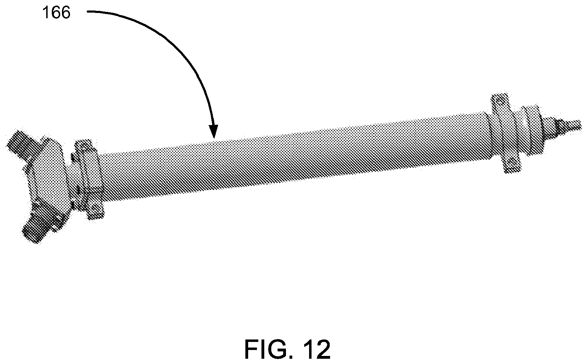

Turning now to Figs. 9-12, the control valve 22 for controlling the flow of fluid through the telescoping fluid porting tube 24 to the VAFN actuator 26 may be in direct fluidic communication with the supply line 28 and the telescoping fluid porting tube 24. The control valve 22 may include a system of components fluidically and communicatively connected. Such system of components may include a solenoid valve, needle valve, electro-hydraulic servo valve, spool valve, bypass valve, or other valve sufficient for controlling flow or pressure of a fluid such as a hydraulic fluid. As depicted, the control valve 22 may include a proportional valve, such as an electro-hydraulic servo valve (herein "EHSV") 160, and a bypass valve 162. The EHSV 160 is an electro-hydraulic device that converts an electrical signal into pressure and flow, and can be spring biased towards the open position of the associated VAFN structure 18 so that if a loss of command occurs, the VAFN structure 18 would open. The EHSV 160 may be a standard two-stage EHSV with a single feedback spring between first and second stages. It may have the properties of a long stroke spool, high chip shear forces, ability to pass large contaminants, and insensitivity to erosion. An integral electrical connector (not shown) may be used to connect to a controller 164 for controlling the control valve 22. The EHSV 160 may have dual coils and may be used for dual channel control from a central command center (not shown), such as a full authority digital engine control (FADEC) system, via the controller 164 communicatively connected to the central command center.

The bypass valve 162 may include a housing defining a spool chamber. A spool of the bypass valve 162 may be axially moveable in one direction into a default position by a helical compression spring of the bypass valve 162. The default position may allow fluidic communication between the proportional valve 160 and the VAFN actuator 26. The spool may also be moveable in the other direction into a secondary position by pressure of a fluid in communication with the bypass valve 162. The secondary position of the bypass valve 162 may enable fluidic communication between a plurality of valve ports of the bypass valve 162 and the plurality of ports 138, 142 of the telescoping fluid porting tube 24. Concurrently, the secondary position may also prohibit fluidic communication between the proportional valve 160 and the VAFN actuator 26. A screened restrictor may also be located in a hydraulic fitting of a fluid line coupled to the bypass valve 162. The purpose of this restrictor is to dampen the pressure of fluid in communication with the bypass valve 162 and to restrict pressure from the control valve 22 should a seal failure occur in a sleeve of the bypass valve 162.

The control valve 22, controllable by the controller 164, may provide selective control of extension and retraction of the VAFN structure 18 relative to at least one of the engine base structure 14 or the transcowl 16 and also selective control of flow area between more than one VAFN structure 18. The controller 164 may be communicatively connected to the control valve 22 of each of the left and right electro-hydraulic control systems 10. Accordingly, the controller 164 may be configured to send a response to the control valve 22 and to receive feedback from a feedback apparatus. The feedback apparatus, such as a linear variable differential transducer (herein "LVDT") 166, may be mountable to at least one of the engine base structure 14, the transcowl 16, or the VAFN structure 18, such as between the engine base structure 14 and the VAFN structure 18 (Fig, 2), or between the transcowl 16 and the VAFN structure 18 (Fig. 9). The LVDT 166 may include a probe core moving element that is spring-loaded towards being extended and also mountable to the VAFN structure 18. Alternatively, the probe core moving element may be located for physical contact with the VAFN structure 18 but not for mounting with the VAFN structure 18. Thus, when connected to or contacting the VAFN structure 18, the LVDT 166 may send feedback to the controller 164 regarding positioning of the VAFN structure 18 and also regarding loading effect of airflow and air pressure on the VAFN structure 18.

As shown in Fig. 9, the electro-hydraulic control system 10 is operable in conjunction with a thrust reverser actuator system (herein "TRAS") 170. The TRAS 170 may contain a thrust reverser actuator 172 mountable between the engine base structure 14 and the transcowl 16 for effecting movement of the transcowl 16 relative to the engine base structure 14. Specifically, the electro-hydraulic control system 10 may operate differently according to each of two operating modes of the turbine engine, a bypass mode and an active mode. When the transcowl 16 is active and not stowed via the TRAS 170, the electro-hydraulic control system 10 is in the bypass mode. Alternatively, when the transcowl 16 is stowed and isolated via the TRAS 170, the electro-hydraulic control system 10 is in the active mode.

When the transcowl 16 is stowed via the TRAS 170, the electro-hydraulic control system 10 is in the active mode. Stow pressure of the thrust reverser actuators 172 will be equal to the return pressure of the engine 12. Stow pressure working on the spool of the bypass valve 162 is overcome by the spring load on the opposite end of the spool, thus moving the spool to the default position. In the default position, pressure from the EHSV 160 is routed to the VAFN actuators 26 through the porting tube assembly 90. Fluid flow and pressure is ported through the porting tube assembly 90 to the VAFN actuators 26. As noted above, a first telescoping fluid porting tube 24 ports extend pressure and a second telescoping fluid porting tube 24 ports retract pressure. Regarding each telescoping fluid porting tube 24, the piston 110 and piston rod 112 are fully retracted and bottom internally in the chamber 108.

As noted above, the controller 164, communicatively connected to the EHSV 160 and the LVDT 166, controls the position of the VAFN actuators 26 and allows the VAFN structure 18 to move to any commanded position. The VAFN actuators 26 may be mechanically synchronized to precisely position the VAFN structure 18. The VAFN structure 18 of the left electro-hydraulic control system 10 and the VAFN structure 18 of the right electro-hydraulic control system 10 may be electronically synchronized by the controller 164 via communicative connection with the EHSV 160 and the LVDT 166 associated with each VAFN structure 18. In an aircraft, for example, each VAFN structure 18 could be expected to have slightly different loads affecting it during flight. The VAFN structure 18 of the left electro-hydraulic control system 10 could have higher loads than the VAFN structure 18 of the right electro-hydraulic control system 10. Because each VAFN structure 18 is controlled by its own associated EHSV 130, the EHSV 130 will provide a proportional signal to match the loads and velocity needed by each VAFN structure 18.

When the transcowl 16 is not stowed via the TRAS 170, the electro-hydraulic control system 10 will be in the bypass mode. Stow pressure of the thrust reverser actuators 172 will be equal to the supply pressure of the engine 12. Stow pressure working on the spool of the bypass valve 162 moves the spool to the secondary position or bypass position. Thus, as noted above, the ports 138, 142 of the telescoping fluid porting tube 24 are connected to a fluid line at return pressure while the bypass valve 162 is in the secondary position. When the thrust reverser actuators 172 move the transcowl 16, a volume of fluid stored inside each telescoping fluid porting tube 24 must change. Such change is effected via the bypass valve 162. As noted above, providing for return pressure at the ports 138, 142 of the telescoping fluid porting tube 24, thus providing for equal pressure on each side of the piston 110, allows for unrestricted telescoping of the telescoping fluid porting tube 24 and unrestricted motion of the transcowl 16 without adding significant load to the transcowl 16 or the engine base structure 14. Consequently, because the ports 138, 142 of the telescoping fluid porting tube 24 are also fluidically connected, pressure is equal at each of the extend and retract chambers 44, 46 of the VAFN actuator 26. Thus, the pressure is equal on each side of the piston 38 of the VAFN actuator 26, and the VAFN actuator 26 is unable to provide output force to the VAFN structure 18 as the transcowl 16 is moved.

Although the invention has been shown and described with respect to a certain embodiment or embodiments, it is obvious that equivalent alterations and modifications are possible within the scope of the appended claims.

## Claims

1. An aircraft engine (12) comprising:
a mechanical assembly including an engine base structure (14), a second structure (16), and a third structure (18); and
an electro-hydraulic control system (10) for controlling the movement of the third structure (18) of the engine (12), the electro-hydraulic control system (10) including:
a power actuator (26) mounted between the second structure (16) and the third structure (18) for moving the third structure (18);
a telescoping fluid porting tube (24) mounted between the engine base structure (14) and the second structure (16) for porting a fluid to the power actuator (26); and
a control valve (22) for controlling flow of the fluid through the telescoping fluid porting tube (24) to the power actuator (26) for effecting movement of the third structure (18) relative to the second structure (16), the control valve (22) being mounted to the engine base structure (14),
wherein the telescoping fluid porting tube (24) has
an outer tubular body (100) having a mounting end (104) mounted to the engine base structure (14), a rod end (102) opposite the mounting end, and a tubular wall (106) defining a chamber (108),
a piston (110) axially disposed in and axially translatable within the chamber (108), and
a telescopically movable piston rod (112) having a first end (114) connected to the piston (110) and a second end (116) mounted to the second structure (16), the piston rod (112) extending at least partially through the rod end (102) of the outer tubular body (100) and being radially inwardly spaced from the tubular wall (106),
wherein the piston rod (110) includes a fluid passageway (134) extending along a length thereof in fluidic communication with the chamber (108) for transferring fluid along a length of the piston rod (110), and
wherein the outer tubular body (100) has a port (130) fluidically coupled to the control valve (22) for receiving fluid therefrom.

2. The aircraft engine (12) according to any preceding claim, wherein the port (130) extends through the tubular wall (106).

3. The aircraft engine (12) according to any preceding claim, wherein the piston (110) is sealed to an inner portion of the tubular wall (106) to prevent fluidic communication between the mounting end (104) and the fluid passageway (134) when the piston (110) is axially translated.

4. The aircraft engine (12) according to any preceding claim, wherein the port (130) is adjacent to the rod end (102) of the outer tubular body (100).

5. The aircraft engine (12) according to any preceding claim, wherein the piston rod (112) includes at least one opening (136) at the first end (114) extending through a wall of the piston rod (112) for fluidically coupling the chamber (108) to the fluid passageway (134).

6. The aircraft engine (12) according to any preceding claim, wherein the telescoping fluid porting tube (124) is mounted to the engine base structure (14) via a gimballing mount (92, 94).

7. The aircraft engine (12) according to any preceding claim, further including first and second telescoping fluid porting tubes (24, 24) mounted between the engine base structure (14) and the second structure (16).

8. The aircraft engine (12) according to the preceding claim, wherein the first telescoping fluid porting tube (24) has a first fluid path (134) extending between the control valve (22) and the power actuator (26) for porting fluid for effecting movement of the third structure (18) away from the engine base structure (14), and the second telescoping fluid porting tube (24) has a second fluid path (134) extending between the control valve (22) and the power actuator (26) for porting fluid for effecting movement of the third structure (18) towards the engine base structure (14).

9. The aircraft engine (12) according to claim 7 or 8, wherein the first and second telescoping fluid porting tubes (24, 24) are parallel to one another.

10. The aircraft engine (12) according to any preceding claim, further including a pair of power actuators (26, 26) for effecting movement of the third structure (18) relative to at least one of the engine base structure (14) or the second structure (16).

11. The aircraft engine (12) according to any preceding claim, wherein the control valve (22) comprises at least one of an electro-hydraulic servo-valve (160) and/or a bypass valve (162).

12. The aircraft engine (12) according to any preceding claim, further including a control system (164) for regulating a fluid pressure at the power actuator (26), the control system (164) communicatively connected to both the control valve (22) and to a feedback apparatus (166) mountable to the third structure (18) or locatable to contact the third structure (18).

13. The aircraft engine (12) according to the preceding claim, wherein the feedback apparatus (166) comprises a linear variable differential transformer.

## Patentansprüche

1. Flugzeugtriebwerk (12), umfassend:
eine mechanische Baugruppe, die eine Triebwerksbasisstruktur (14), eine zweite Struktur (16) und eine dritte Struktur (18) enthält; und
ein elektrohydraulisches Steuersystem (10) zum Steuern der Bewegung der dritten Struktur (18) des Triebwerks (12), das elektrohydraulische Steuersystem (10) enthaltend:
ein Kraftstellglied (26), das zwischen der zweiten Struktur (16) und der dritten Struktur (18) zum Bewegen der dritten Struktur (18) angebracht ist;
eine zusammenschiebbare Fluidbeförderungsröhre (24), die zwischen der Triebwerksbasisstruktur (14) und der zweiten Struktur (16) zum Befördern eines Fluids zum Kraftstellglied (26) angebracht ist; und
ein Steuerventil (22) zum Steuern von Strömung des Fluids durch die zusammenschiebbare Fluidbeförderungsröhre (24) zum Kraftstellglied (26) zum Bewirken von Bewegung der dritten Struktur (18) bezüglich der zweiten Struktur (16), wobei das Steuerventil (22) an der Triebwerksbasisstruktur (14) angebracht ist,
wobei die zusammenschiebbare Fluidbeförderungsröhre (24) einen äußeren röhrenförmigen Körper (100) mit einem Anbringungsende (104), das an der Triebwerksbasisstruktur (14) angebracht ist, einem Stangenende (102) gegenüber dem Anbringungsende und einer röhrenförmigen Wand (106) aufweist, die eine Kammer (108) definieren,
einen Kolben (110), der axial innerhalb der Kammer (108) angeordnet und axial darin verschiebbar ist, und
eine teleskopartig bewegliche Kolbenstange (112) mit einem ersten Ende (114), das mit dem Kolben (110) verbunden ist, und einem zweiten Ende (116), das an der zweiten Struktur (16) angebracht ist, wobei die Kolbenstange (112) zumindest teilweise durch das Stangenende (102) des äußeren röhrenförmigen Körpers (100) verläuft und radial nach innen zur röhrenförmigen Wand (106) beabstandet ist,
wobei die Kolbenstange (110) einen Fluiddurchgang (134) enthält, der entlang einer Länge davon in Fluidverbindung mit der Kammer (108) zum Überführen von Fluid entlang einer Länge der Kolbenstange (110) verläuft, und
wobei der äußere röhrenförmige Körper (100) eine Durchlassöffnung (130) aufweist, die fluidtechnisch an das Steuerventil (22) zum Aufnehmen von Fluid davon gekuppelt ist.

2. Flugzeugtriebwerk (12) nach dem vorhergehenden Anspruch, wobei die Durchlassöffnung (130) durch die röhrenförmige Wand (106) verläuft.

3. Flugzeugtriebwerk (12) nach einem der vorhergehenden Ansprüche, wobei der Kolben (110) an einem Innenabschnitt der röhrenförmigen Wand (106) abgedichtet ist, um Fluidverbindung zwischen dem Anbringungsende (104) und dem Fluiddurchgang (134) zu verhindern, wenn der Kolben (110) axial verschoben wird.

4. Flugzeugtriebwerk (12) nach einem der vorhergehenden Ansprüche, wobei die Durchlassöffnung (130) dem Stangenende (102) des äußeren röhrenförmigen Körpers (100) benachbart ist.

5. Flugzeugtriebwerk (12) nach einem der vorhergehenden Ansprüche, wobei die Kolbenstange (112) zumindest eine Öffnung (136) am ersten Ende (114) enthält, die durch eine Wand der Kolbenstange (112) zum fluidtechnischen Kuppeln der Kammer (108) an den Fluiddurchgang (134) verläuft.

6. Flugzeugtriebwerk (12) nach einem der vorhergehenden Ansprüche, wobei die zusammenschiebbare Fluidbeförderungsröhre (124) über eine Kardanaufhängungsanbringung (92, 94) an der Triebwerksbasisstruktur (14) angebracht ist.

7. Flugzeugtriebwerk (12) nach einem der vorhergehenden Ansprüche, ferner enthaltend erste und zweite zusammenschiebbare Fluidbeförderungsröhren (24, 24), die zwischen der Triebwerksbasisstruktur (14) und der zweiten Struktur (16) angebracht sind.

8. Flugzeugtriebwerk (12) nach dem vorhergehenden Anspruch, wobei die erste zusammenschiebbare Fluidbeförderungsröhre (24) einen ersten Fluidweg (134) aufweist, der zwischen dem Steuerventil (22) und dem Kraftstellglied (26) zum Befördern von Fluid zum Bewirken von Bewegung der dritten Struktur (18) weg von der Triebwerksbasisstruktur (14) verläuft, und wobei die zweite zusammenschiebbare Fluidbeförderungsröhre (24) einen zweiten Fluidweg (134) aufweist, der zwischen dem Steuerventil (22) und dem Kraftstellglied (26) zum Befördern von Fluid zum Bewirken von Bewegung der dritten Struktur (18) zur Triebwerksbasisstruktur (14) hin verläuft.

9. Flugzeugtriebwerk (12) nach Anspruch 7 oder 8, wobei die ersten und zweiten zusammenschiebbaren Fluidbeförderungsröhren (24, 24) parallel zueinander sind.

10. Flugzeugtriebwerk (12) nach einem der vorhergehenden Ansprüche, ferner enthaltend ein Paar Kraftstellglieder (26, 26) zum Bewirken von Bewegung der dritten Struktur (18) bezüglich zumindest einer der Triebwerksbasisstruktur (14) oder der zweiten Struktur (16).

11. Flugzeugtriebwerk (12) nach einem der vorhergehenden Ansprüche, wobei das Steuerventil (22) zumindest eines eines elektrohydraulischen Servoventils (160) und/oder eines Umleitventils (162) umfasst.

12. Flugzeugtriebwerk (12) nach einem der vorhergehenden Ansprüche, ferner enthaltend ein Steuersystem (164) zum Regulieren eines Fluiddrucks am Kraftstellglied (26), wobei das Steuersystem (164) kommunikationstechnisch sowohl mit dem Steuerventil (22) als auch einer Rückmeldungsvorrichtung (166) verbunden ist, die an der dritten Struktur (18) anbringbar ist oder zum Berühren der dritten Struktur (18) angeordnet sein kann.

13. Flugzeugtriebwerk (12) nach dem vorhergehenden Anspruch, wobei die Rückmeldungsvorrichtung (166) einen linearen variablen Differentialumformer umfasst.

## Revendications

1. Moteur d'aéronef (12) comprenant :
un ensemble mécanique comportant une structure de base de moteur (14), une deuxième structure (16), et une troisième structure (18) ; et
un système de commande électrohydraulique (10) pour commander le mouvement de la troisième structure (18) du moteur (12), le système de commande électrohydraulique (10) comportant :
un actionneur de puissance (26) monté entre la deuxième structure (16) et la troisième structure (18) pour déplacer la troisième structure (18) ;
un tube de transport de fluide télescopique (24) monté entre la structure de base de moteur (14) et la deuxième structure (16) pour transporter un fluide vers l'actionneur de puissance (26) ; et
une soupape de commande (22) pour commander l'écoulement de fluide à travers le tube de transport de fluide télescopique (24) vers l'actionneur de puissance (26) pour effectuer le déplacement de la troisième structure (18) par rapport à la deuxième structure (16), la soupape de commande (22) étant montée sur la structure de base de moteur (14),
dans lequel le tube de transport de fluide télescopique (24) a
un corps tubulaire externe (100) ayant une extrémité de montage (104) montée sur la structure de base de moteur (14), une extrémité de tige (102) à l'opposé de l'extrémité de montage, et une paroi tubulaire (106) définissant une chambre (108),
un piston (110) disposé axialement dans la chambre (108) et pouvant effectuer une translation axialement à l'intérieur de celle-ci, et
une tige de piston mobile de manière télescopique (112) ayant une première extrémité (114) reliée au piston (110) et une deuxième extrémité (116) montée sur la deuxième structure (16), la tige de piston (112) s'étendant au moins partiellement à travers l'extrémité de tige (102) du corps tubulaire externe (100) et étant espacée radialement vers l'intérieur de la paroi tubulaire (106),
où la tige de piston (110) comporte un passage de fluide (134) s'étendant sur une longueur de celle-ci en communication fluidique avec la chambre (108) pour transférer le fluide sur une longueur de la tige de piston (110), et
où le corps tubulaire externe (100) a un orifice (130) couplé de manière fluidique à la soupape de commande (22) pour recevoir le fluide à partir de celle-ci.

2. Moteur d'aéronef (12) selon l'une des revendications précédentes, dans lequel l'orifice (130) s'étend à travers la paroi tubulaire (106).

3. Moteur d'aéronef (12) selon l'une des revendications précédentes, dans lequel le piston (110) est scellé à une partie interne de la paroi tubulaire (106) pour empêcher la communication fluidique entre l'extrémité de montage (104) et le passage de fluide (134) lorsque le piston (110) est mis en translation axiale.

4. Moteur d'aéronef (12) selon l'une des revendications précédentes, dans lequel l'orifice (130) est adjacent à l'extrémité de tige (102) du corps tubulaire externe (100).

5. Moteur d'aéronef (12) selon l'une des revendications précédentes, dans lequel la tige de piston (112) comporte au moins une ouverture (136) à la première extrémité (114) s'étendant à travers une paroi de la tige de piston (112) pour coupler de manière fluidique la chambre (108) au passage de fluide (134).

6. Moteur d'aéronef (12) selon l'une des revendications précédentes, dans lequel le tube de transport de fluide télescopique (124) est monté sur la structure de base de moteur (14) par l'intermédiaire d'un élément de montage à cardan (92, 94).

7. Moteur d'aéronef (12) selon l'une des revendications précédentes, comportant en outre des premier et deuxième tubes de transport de fluide télescopiques (24, 24) montés entre la structure de base de moteur (14) et la deuxième structure (16).

8. Moteur d'aéronef (12) selon la revendication précédente, dans lequel le premier tube de transport de fluide télescopique (24) a un premier trajet de fluide (134) s'étendant entre la soupape de commande (22) et l'actionneur de puissance (26) pour transporter le fluide afin d'effectuer le déplacement de la troisième structure (18) à l'écart de la structure de base de moteur (14), et le deuxième tube de transport de fluide télescopique (24) a un deuxième trajet de fluide (134) s'étendant entre la soupape de commande (22) et l'actionneur de puissance (26) pour transporter le fluide afin d'effectuer le déplacement de la troisième structure (18) vers la structure de base de moteur (14).

9. Moteur d'aéronef (12) selon la revendication 7 ou 8, dans lequel les premier et deuxième tubes de transport de fluide télescopiques (24, 24) sont parallèles l'un à l'autre.

10. Moteur d'aéronef (12) selon l'une des revendications précédentes, comportant en outre une paire d'actionneurs de puissance (26, 26) pour effectuer le déplacement de la troisième structure (18) par rapport à au moins l'une de la structure de base de moteur (14) et de la deuxième structure (16).

11. Moteur d'aéronef (12) selon l'une des revendications précédentes, dans lequel la soupape de commande (22) comprend une servo-soupape électrohydraulique (160) et/ou une soupape de dérivation (162).

12. Moteur d'aéronef (12) selon l'une des revendications précédentes, comportant en outre un système de commande (164) pour réguler une pression de fluide au niveau de l'actionneur de puissance (26), le système de commande (164) étant relié en communication à la fois à la soupape de commande (22) et à un appareil de rétroaction (166) pouvant être monté sur la troisième structure (18) ou pouvant être positionné pour entrer en contact avec la troisième structure (18).

13. Moteur d'aéronef (12) selon la revendication précédente, dans lequel l'appareil de rétroaction (166) comprend un transformateur différentiel à variation linéaire.
